# EUROPÄISCHE PATENTSCHRIFT

(11) **EP 0 400 128 B1**
(45) Veröffentlichungstag und Bekanntmachung des Hinweises auf die Patenterteilung: **08.12.1993**
(21) Anmeldenummer: 90900003.6
(22) Anmeldetag: 07.12.1989
(51) Int. Cl.: C08G 63/79, C08G 63/18

(54) **VERFAHREN ZUR POLYKONDENSATION VON DIPHENOLEN MIT HALOGENIDEN VON DICARBONSÄUREN**
PROCESS FOR POLYCONDENSATION OF DIPHENOLS WITH HALOGENIDES OF DICARBOXYLIC ACIDS
PROCEDE DE POLYCONDENSATION DE DIPHENOLS AVEC DES HYDROCARBURES HALOGENES D'ACIDES DICARBOXYLIQUES

(30) Priorität: 09.12.1988 AT 3011/88
(43) Veröffentlichungstag der Anmeldung: 05.12.1990
(73) Patentinhaber: ISONOVA TECHNISCHE INNOVATIONEN GES.M.B.H., A-2355 Wiener Neudorf (AT)
(72) Erfinder: HERRSCHER, Otto, A-2352 Guntramsdorf (AT)
(74) Vertreter: Stampfer, Heinz
(86) Internationale Anmeldenummer: AT8900119
(87) Internationale Veröffentlichungsnummer: WO9006335

(56) Entgegenhaltungen:
- EP-A- 0 041 496
- EP-A- 0 245 689
- WO-A-88/03152
- FR-A- 1 479 350
- Chemical Abstracts, Band 82, Nr. 10, 10. März 1975, (Columbus, Ohio, US) siehe Seite 35, Zusammenfassung 58549v & JP A 7478794

## Beschreibung

Die Erfindung betrifft ein Verfahren zur Polykondensation von Diphenolen, die zumindest zum größten Teil ein zentrales Kohlenstoffatom aufweisen, wobei an dieses Kohlenstoffatom gebundene Gruppen in ihrer freien Drehung gehindert sind, und Halogeniden, insbesondere Chloriden, von Dicarbonsäuren nach dem Zweiphasengrenzflächenverfahren,in einer feinen Dispersion der wässrigen Phase, bestehend aus dem Diphenol, Alkalihydroxid zur Bildung des Diphenolates in stöchiometrischem Verhältnis oder in geringem Überschuß, sowie einem Phasentransferkatalysator in einem Gemisch aus Wasser und einem organischen Lösungsvermittler, mit der organisch-flüssigen Phase, bestehend aus einer Lösung des Säurehalogenids in einem halogenierten Kohlenwasserstoff als Lösungsmittel, wobei nach Beendigung der Polykondensation das Polymere in diesem Lösungsmittel gelöst ist und aus ihm durch Zugabe eines Fällungsmittels ausgefällt wird.

### Stand der Technik

Ein Verfahren der obengenannten Art ist aus der EP-A1-41495 der Anmelderin bekannt. Gemäß dieser EP-A1 wird bei solchen Polykondensationsverfahren, bei dem insbesondere 1,1-Bis(4-hydroxyphenyl)-1-phenyläthan oder 9,9-Bis(4-hydroxyphenyl)fluoren als Diphenole eingesetzt werden, einwertige aliphatische Alkohole wie Isopropanol eingesetzt. Dieses Isopropanol als Lösungsvermittler hat gegenüber Dioxan, das als gegenüber den Säurechloriden inerte Verbindung früher vielfach als Lösungsvermittler bei zwei Zweiphasengrenzflächen Polykondensationsverfahren zur Herstellung von aromatischen Polyestern verwendet wurde, vor allem den Vorteil seiner wesentlich geringeren Giftigkeit. Es hat sich jedoch gezeigt, daß man bei der Herstellung von manchen Polyestern wie z.B. einem auf Basis von 9.9-Bis (4-hydroxphenyl)fluoren und iso/tere-Phthaloylchlorid mit dem Einsatz von einwertigen aliphatischen Alkoholen wie Isopropanol unter sonst gleichen Bedingungen nicht so hohe mittlere Molekulargewichte erzielen kann wie mit Dioxan als Lösungsvermittler (siehe zum Vergleich die Beispiele 4 und 5 der genannten EP-A1 41 496).

### Darstellung der Erfindung

Der Erfindung liegt nun die Aufgabe zugrunde, ein Polykondensationsverfahren der eingangs genannten Art anzugeben, bei dem ein Lösungsvermittler eingesetzt wird, der relativ ungiftig ist und mit dem höhere mittlere Molekulargewichte des herzustellenden Polyesters erzielt werden können als z.B. mit Isopropanol als Lösungsvermittler.

Diese Aufgabe wird in dem erfindungsgemäßen Verfahren gelöst, das dadurch gekennzeichnet ist, daß als Lösungsvermittler für das Diphenol zumindest zum größten Teil Aceton oder Methyläthylketon eingesetzt wird.

Aceton und Methyläthylketon haben überdies den Vorteil, daß sie unter normalen Bedingungen gegenüber den Säurechloriden inert sind, was, wie schon in der EP-A1-41 496 dargelegt, bei einwertigen aliphatischen Alkoholen nicht der Fall ist.

Ein solcher Lösungsvemittler hat die Eigenschaft, daß er sowohl in der wässrigen als auch in der organisch-flüssigen Phase löslich ist. Die Konzentration des Lösungsvermittlers in der wässrigen Phase muß dabei genügend hoch sein, um hier das Diphenolat sicher in Lösung zu halten, während die sich daraus ergebende Konzentration des Lösungsvermittlers in der organisch-flüssigen Phase nicht so hoch sein darf, daß das sich in der organischflüssigen Phase bildende Polymere noch vor der Beendigung des Polykondensationsprozesses ausfällt.

Das erfindungsgemäße Verfahren ist dadurch gekennzeichnet, daß zumindest der größte Teil der eingesetzten Phenole die Struktur 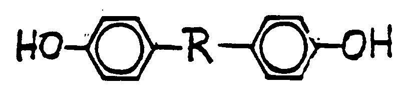
aufweist, wobei R ein bifunktioneller, mindestens einen aromatischen oder cykloaliphatischen Ring enthaltender Kohlenwasserstoffrest ist.

In einer weiteren vorteilhaften Ausgestaltung des erfindungsgemäßen Verfahrens wird als Diphenol 9,9-Bis(4-hydroxyphenyl)-fluoren eingesetzt.

Nach einer anderen vorteilhaften Ausgestaltung des erfindungsgemäßen Verfahrens wird als Lösungsvermittler für das Diphenol Aceton und als Lösungsmittel Dichlormethan eingesetzt.

In einer noch weiteren vorteilhaften Ausgestaltung des erfindungsgemäßen Verfahrens ist eine als Losungsvermittler für das Diphenol eingesetzte organische Flüssigkeit dieselbe wie die, welche als Fällungsmittel für das Polymer eingesetzt wird.

Gemäß einer letzten vorteilhaften Ausgestaltung der Erfindung schließlich ist das erfindungsgemäße Verfahren dadurch gekennzeichnet, daß eine oder mehrere im Verfahren verwendeten Flüssigkeiten, nämlich das Wasser, das Lösungsmittel, der Lösungsvermittler für das Diphenol und/oder das Fällungsmittel für das Polymer durch Rektifikation wiedergewonnen wird bzw. werden.

### Ein Weg zur Ausführung der Erfindung

Die Erfindung wird nachstehend anhand des Beispiels einer Synthese eines aromatischen Polyesters auf Basis von 9,9-Bis(4-hydroxyphenyl)fluoren und iso/tere-Phthaloylchlorid näher erläutert.

Zur Herstellung der wässrigen Phase des Zweiphasengrenzflächenverfahrens werden 3150 g (9 Mol) 9,9-Bis(4-hydroxyphenyl)fluoren einer Reinheit von 99,9 % und 1365 g (20,7 Mol) 85 %iges Kaliumhydroxyd in einem Gemisch aus 27 l deionisiertem Wasser und 9 l destilliertem Aceton bei Raumtemperatur gelöst. 207 g (0,9 Mol) Benzyltriäthylammoniumchlorid als Phasentransferkatalysator werden bei Raumtemperatur in deionisiertem Wasser gelöst und diese Lösung zur wässrigen Phase hinzugefügt.

Für die Herstellung der organisch flüssigen Phase werden 913,65 g (4,5 Mol) iso-Phthaloylchlorid und 913,65 g (4,5 Mol) tere-Phthaloylchlorid in 6 l Dichlormethan, das vorher über Molekularsieb 4A getrocknet wurde, gelöst.

In einem mit einem hochtourigen Rührwerk versehenen Behälter wird zunächst die wässrige Phase vorgeiegt und ihr zur Herstellung einer feinen Präemulsion unter intensivem Rühren 45 l Dichlormethan hinzugefügt. Dabei entsteht eine feine Emulsion, Geren Temperatur man durch entsprechende Vorkühlung des zugeführten Dichlormethans auf 17°C einstellt, In diese Präemulsion wird nun unter weiterem intensiven Rühren die organisch flüssige Phase während einer Zeit von etwa 30 s eingegossen. Während der darauffolgenden 10 min steigt unter weiterem Rühren die Viskosität der Emulsion stark an. Nach dieser Zeit ist die Polykondensation im wesentlichen abgeschlossen, wobei der gebildete Polyester in der organisch flüssigen Phase gelöst ist.

Danach trennt sich die organisch flüssige Phase von der wässrigen Phase durch Absitzen. Die wässrige Phase wird dekantiert, die verbleibende, noch stark alkalische organische Phase unter Rühren mit verdünnter Salzsäure auf einen pH-Wert von 6 - 7 eingestellt.

Die organisch flüssige Phase wird nun dreimal mit jeweils 30 l demineralisiertem Nasser gewaschen. Danach wird unter weiterem Rühren, zum Fällen des Polyesters, 30 l Aceton hinzugefügt. Das Aceton wird von dem Präzipitat durch Dekantieren getrennt und dem im wesentlichen aus dem erhaltenen Polyester bestehenden Präzipitat 30 l Aceton hinzugefügt. Die Suspension des Präzipitats wird dann zentrifugiert, wodurch noch Reste von Dichlormethan entfernt werden, und das Präzipitat danach in der Zentrifuge mit 30 l eines 1:1 Gemisches aus Aceton und deionisiertem Wasser und anschließend mit 60 l deionisiertem Nasser gewaschen. Der erhaltene Polyester wird danach bei 130° C in einem Umlufttrockenschrank innerhalb von 16 h getrocknet.

Man erhält 3930 g Polyester (91 % der Theorie) mit einer inhärenten Viskosität von 3,8 dl/g, gemessen bei 30 ° C in 100 ml Lösung von 0,5 g Polyester in einem Lösungsmittel bestehend aus 60 Gew.% Phenol und 40 Gew.% 1,1,2,2-Tetrachloräthan. Das durch Gelpermeationschromatographie bestimmte relative Molekulargewicht des Polyesters beträgt 1,133.000 (gemessen in 1,2-Dichloräthan bezüglich Polystyrolstandards).

Bei dem beschriebenen Verfahren werden große Mengen an Wasser, Aceton una Dichlormethan eingesetzt, die nach Beendigung des Verfahrens zu einem großen Teil als Gemische Wasser-Aceton und Aceton-Dichlormethan vorliegen. Alle diese drei Flüssigkeiten, nämlich Wasser, Aceton und Dichlormethan, können, wie gefunden wurde, durch Rektifikation voneiander getrennt werden, und zwar in einer Reinheit, daß sie dem Prozeß erneut zugeführt werden können.

Bei der in obigem Beispiel wiedergegebenen Verfahrensvariante, bei der Aceton sowohl als Lösungsvermittler für das Diphenol als auch als Fällungsmittel für den Polyester dient, sind also nur drei Flüssigkeiten involviert, die durch Rektifikation getrennt werden müssen. Die Realisierung des Trennverfahrens wird dadurch vereinfacht und auf diese Weise ein zusätzlicher Vorteil erreicht.

### Gewerbliche Verwertbarkeit

Die nach dem erfindungsgemäßen Verfahren hergestellten Polyester können z.B. als elektrische Isolierstoffe eingesetzt werden.

## Patentansprüche

1. Verfahren zur Polykondensation von Diphenolen, die zumindest zum größten Teil ein zentrales Kohlenstoffatom aufweisen, wobei an dieses Kohlenstoffatom gebundene Gruppen in ihrer freien Drehung gehindert sind, und Halogeniden, insbesondere Chloriden, von Dicarbonsäuren nach dem Zweiphasengrenzflächenverfahren, in einer feinen Emulsion der wässrigen Phase, bestehend aus dem Diphenol, Alkalihydroxid zur Bildung des Diphenolates in stöchiometrischem Verhältnis oder in geringem Überschuß, sowie einem Phasentransferkatalysator in einem Gemisch aus Wasser und einem organischen Lösungsvermittler mit der organisch-flüssigen Phase, bestehend aus einer Lösung des Säurehalogenids in einem halogenierten Kohlenwasserstoff als Lösungsmittel, wobei nach Beendigung der Polykondensation das Polymer in diesem Lösungsmittel gelöst ist und aus ihm durch Zugabe eines Fällungsmittels ausgefällt wird, dadurch gekennzeichnet, daß als Lösungsvermittler zumindest zum größten Teil Aceton oder Methyläthylketon eingesetzt wird und daß zumindest der größte Teil der eingesetzten Diphenole die Struktur 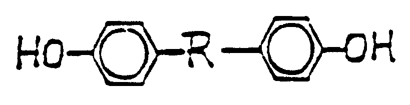 aufweist, wobei R ein bifunktioneller, mindestens einen aromatischen oder zykloaliphatischen Ring enthaltender Kohlenwasserstoffrest ist.

2. Verfahren nach Anspruch 1, dadurch gekennzeichnet, daß als Diphenol 9,9-Bis (4-hydroxyphenyl)fluoren eingesetzt wird.

3. Verfahren nach einem der Ansprüche 1 bis 2, dadurch gekennzeichnet, daß als Lösungsvermittler für das Diphenol Aceton und als Lösungsmittel Dichlormethan eingesetzt wird.

4. Verfahren nach einem der Ansprüche 1 bis 3, dadurch gekennzeichnet, daß eine als Lösungsvermittler für das Diphenol eingesetzte organische Flüssigkeit dieselbe ist wie diejenige, welche als Fällungsmittel für das Polymer eingesetzt wird.

5. Verfahren nach einem der Ansprüche 1 bis 4, dadurch gekennzeichnet, daß eine oder mehrere der im Verfahren verwendeten Flüssigkeiten, nämlich das Wasser, das Lösungsmittel, der Lösungsvermittler für das Diphenol und/oder das Fällungsmittel für das Polymer durch Rektifikation wiedergewonnen wird bzw. werden.

## Claims

1. A process for the polycondensation of diphenols which at least far the most part have a central carbon atom, in which respect groups bound to this carbon atom are hindered in their free rotation, and halides, in particular chlorides, of dicarboxylic acids according to the two-phase interface process, in a fine emulsion of the aqueous phase, consisting of the diphenol, alkali hydroxide for the formation of the diphenolate in stoichiometric ratio or in slight excess, as well as a phase transfer catalyst in a mixture of water and an organic solubilizer with the organic-liquid phase, consisting of a solution of the acid halide in a halogenated hydrocarbon as solvent, in which respect after conclusion of the polycondensation the polymer is dissolved in this solvent and is precipitated from it by addition of a precipitant, characterised in that at least for the most part acetone or methyl ethyl ketone is used as solubilizer and in that at least the majority of the diphenols used have the structure 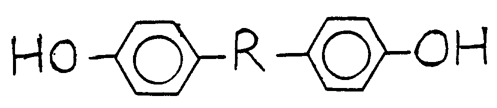 R being a bifunctional hydrocarbon residue containing at least one aromatic or cycloaliphatic ring.

2. A process according to claim 1, characterised in that 9,9-Bis (4-hydroxyphenyl)fluorene is used as diphenol.

3. A process according to any one of claims 1 or 2, characterised in that acetone is used as solubilizer for the diphenol and dichloromethane is used as solvent.

4. A process according to any one of claims 1 to 3, characterised in that an organic liquid used as solubilizer for the diphenol is the same as the one which is used as precipitant for the polymer.

5. A process according to any one of claims 1 to 4, characterised in that one or more of the liquids used in the process, namely the water, the solvent, the solubilizer for the diphenol and/or the precipitant for the polymer is or are recovered by rectification.

## Revendications

1. Procédé de polycondensation de diphénols, dont au moins la plupart comportent un atome de carbone central, sur lequel les groupes liés sont stériquement empêchés d'entrer en rotation, et d'halogénures, notamment chlorures, d'acides dicarboxyliques, ce procédé étant éffectué à l'interface de deux phases, dans une émulsion fine constituée d'une part d'une phase aqueuse, elle-même constituée du diphénol, d'hydroxyde alcalin pour la formation du diphénolate, selon un rapport stoechiométrique ou en léger excès, ainsi que d'un catalyseur de transfert de phase, en mélange dans de l'eau et un agent organique de solubilisation et, d'autre part d'une phase liquide organique, elle-même constituée d'une solution de l'halogénure d'acide dans un hydrocarbure halogéné en tant que solvant, procédé dans lequel, à l'issue de la polycondensation, le polymère est dissous dans ce solvant et précipité dans celui-ci par addition d'un agent de précipitation, caractérisé en ce qu'on utilise au moins en majeure partie de l'acétone ou de la méthyléthylcétone en tant qu'agent de solubilisation et en ce que le diphénol utilisé présente au moins en majeure partie la structure suivante: 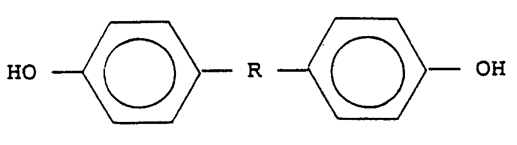 dans laquelle R est un groupe hydrocarboné bifonctionnel, contenant au moins un cycle aromatique ou cycloaliphatique.

2. Procédé selon la revendication 1, caractérisé en ce qu'on utilise en tant que diphénol du 9,9-bis (4-hydroxyphénol)fluorène.

3. Procédé selon l'une quelconque des revendications 1 à 2, caractérisé en ce qu'on utilise de l'acétone comme agent de solubilisation pour le diphénol et du dichlorométhane comme solvant.

4. Procédé selon l'une quelconque des revendications 1 à 3, caractérisé en ce que le liquide organique utilisé comme agent de solubilisation pour le diphénol est le même que celui qui est utilisé comme agent de précipitation pour le polymère.

5. Procédé selon l'une quelconque des revendications 1 à 4, caractérisé en ce qu'un ou plusieurs des liquides utilisés dans le procédé, c'est-à-dire l'eau, le solvant, l'agent de solubilisation pour le diphénol et/ou l'agent de précipitation pour le polymère, est ou sont récupérés par rectification.
